# EUROPEAN PATENT APPLICATION

(11) **EP 4 043 689 A1**
(43) Date of publication of application: **17.08.2022**
(21) Application number: 22020052.1
(22) Date of filing: 16.02.2022
(51) Int. Cl.: E06B 7/23, A01K 13/00, E05C 17/44

(54) **DRAUGHT EXCLUDER**

(30) Priority: 16.02.2021 GB 202102131
(71) Applicant: William H Andrew Morrow, Greater London TW10 7NN (GB)
(72) Inventor: William H Andrew Morrow, Greater London TW10 7NN (GB)
(74) Representative: Hanna, John Philip

(57) **Abstract**

A draught excluder 2 for limiting the movement of air through a doorway 10 or opening, the draught excluder 2 comprising: an attachment means 3 for attaching the draught excluder 2 to a door 1, doorframe 5 or opening; and a sealing means 4 for limiting and/or preventing the flow of air or draughts through the doorway 10 or opening, wherein at least a part of the sealing means 4 is locatable between a door 1 and a wall 7, doorframe 5 or opening.

## Description

The present invention relates to a draught excluder, particularly a pet-friendly draught excluder for limiting the movement of air through a doorway or opening in e.g. a wall.

The flow of cold air through gaps in buildings can cause discomfort to building occupants. It is typical to counteract such draughts by turning up the heating system of the building but doing so can prove wasteful, expensive and environmentally-costly. An alternative solution is to use sealing members to completely block gaps in the building fabric to prevent the ingress of any cold air. For example, a building occupant may close all interior doors and proceed to block gaps around such doors using a conventional draught excluder in the form of an elongate heavy pillow placed adjacent to the lower part of the door. While such solutions can be effective in preventing movement of air through gaps, they also present significant obstacles when occupants subsequently want to use the doors. For human adults this can be inconvenient but for smaller occupants such as pets conventional draught excluders and doors present significant obstacles. There exists the need for a draught excluder which is effective in reducing draughts but is less of a barrier to occupants of a building.

It is an object of the invention to obviate or mitigate the problems outlined above. In particular, it is an object of the invention to provide a means by which draughts through doorways can be reduced. It is a further object of the invention to provide a draught excluder which can be easily fitted. It is a yet further object of the invention to provide a draught excluder which provides less of a barrier to using a door. It is a yet further object of the invention to provide a draught excluder which is dual-purpose.

According to a first aspect of the invention there is provided a draught excluder for limiting the movement of air through a doorway or opening, the draught excluder comprising: an attachment means for attaching the draught excluder to a door, doorframe or opening; and a sealing means for limiting and/or preventing the flow of air or draughts through the doorway or opening, wherein at least a part of the sealing means is locatable between a door and a wall, doorframe or opening. Advantageously, the attachment means allows the draught excluder to be fitted to the upper edge of the door.

Ideally the attachment means is attachable to a door.

Preferably the attachment means is attachable to a door via adhesive.

Preferably the attachment means is attachable to an internal or external door.

Preferably the attachment means is a mechanical attachment means.

Preferably the attachment means is a bracket.

Preferably the bracket is adapted for attaching a draught excluder to a door.

Preferably the attachment means is adapted to retain at least a part of the draught excluder at or near the upper edge of a door, doorframe or other opening.

Preferably the attachment means is adapted to retain at least a part of the sealing means at or near the upper edge of a door, doorframe or other opening.

Preferably the attachment means comprises two side portions.

Preferably each side portion is triangular.

Preferably the shape of each side portion is a right-angled triangle.

Preferably each side portion is a half-moon section.

Preferably the attachment means comprises two end portions.

Preferably each end portion is rectangular.

Preferably the side portions are attached to each other via the end portions.

Preferably the attachment means comprises two right-angled triangular portions which are connected by two rectangular portions.

Preferably the attachment means is configured to receive the upper corner of a door.

Preferably the attachment means is configured to receive the upper edge or upper corner of a door.

Preferably the attachment means is configured to receive the outer and upper corner of a door. By 'outer and upper corner of a door' it is meant that corner of a door which is uppermost in use and furthest from the door frame when the door is in an open or semi-closed position.

Preferably the attachment means is engageable with the upper corner or upper edge of a door, in use.

Optionally the bracket is adapted to catch on the doorstop part of the door frame. Advantageously, this eliminates the need for velcro or elastic bands to keep the door in place with the draught excluder fitted.

Preferably the bracket comprises a connection means.

Preferably the connection means is adapted to allow the bracket to be connected and/or attached to a door.

Preferably the connection means fits over the top of a door.

Preferably the connection means is adapted to receive the top edge of a door.

Optionally the bracket comprises a retainment means.

Preferably the retainment means is adapted to engage and retain a draught excluder.

Preferably the retainment means is sized so as to receive at least a part of the draught excluder.

Preferably the retainment means is sized so as to receive the upper horizontal portion of the sealing means.

Preferably at least a part of the sealing means is locatable in the retainment means.

Preferably the horizontal portion of the sealing means is locatable in the retainment means.

Preferably in use the horizontal portion rests on the bracket and is held at an appropriate position with respect to the top of the door.

Preferably the bracket is adapted to hold the draught excluder at an appropriate height above the floor such that a gap is formed below the draught excluder.

Preferably the bracket comprises an engagement means.

Preferably the engagement means is adapted to engage with at least a part of a door.

Preferably the engagement means is adapted to engage with the doorstop part of a door frame.

Preferably in use the bracket retains and locates a draught excluder in position with respect to a door.

Preferably the bracket can be attached to the door by fitting the connection means of the bracket over the top of the door to rest thereon.

Preferably the attachment means is a magnetic attachment means.

Preferably the attachment means comprises a plurality of magnets.

Preferably the attachment means comprises a plurality of permanent magnets.

Preferably the attachment means is located on a side of the sealing means.

Preferably the spacing between the magnets on the side of the door matches the spacing between the magnets of the attachment means.

Preferably in use, the attachment means retains the draught excluder on a door by engaging with magnets on the side of the door.

Preferably the sealing means is locatable over the edge of the door, in use.

Preferably the attachment means is located on a surface of the draught excluder.

Preferably the attachment means is located on a surface of the sealing means.

Preferably the attachment means is located on the surface of the sealing means which faces the door, in use.

Preferably the attachment means retains the draught excluder on a door, doorframe, opening or wall.

Preferably the attachment means is adhesively attached to a door, doorframe, opening or wall.

Preferably the attachment means is attached to the door via fixing members such as tacks, nails or screws, or via magnetic means attached to both the door, doorframe, opening or wall and draught excluder.

Preferably the attachment means is attachable to the sealing means.

Optionally the attachment means is rigidly attached to the sealing means.

Preferably the attachment means is attachable to the sealing means via a fastening means.

Preferably the attachment means is attachable to the sealing means via a releasable fastening means.

Preferably the sealing means is attachable to a side portion of the attachment means.

Preferably the sealing means is attachable to either side portion of the attachment means.

Ideally the sealing means is adapted to limit, reduce and/or prevent air from flowing through a gap between the door and aperture/doorframe.

Preferably the sealing means is configured to allow a gap to be formed between the floor and the sealing means, in use.

Preferably the sealing means is at least partially locatable between a door and a doorframe, wall or opening, in use.

Preferably the sealing means is locatable on one side of a door, in use.

Optionally the sealing means is locatable over the edge of a door, in use.

Preferably the sealing means is configured to hold a door slightly ajar.

Preferably the sealing means is configured to prevent a door from completely closing.

Preferably the sealing means is a flexible and/or padded.

Preferably the sealing means comprises an outer sheath.

Preferably the sealing means comprises a waterproof sheath.

Preferably the sealing means comprises internal padding, such as foam.

Preferably the sealing means comprises an outer sheath and internal padding.

Preferably the outer sheath is flexible.

Preferably the outer sheath comprises cloth or similar material.

Preferably the sealing means comprises a zip.

Preferably the horizontal portion and/or vertical portion comprises a zip.

Preferably the sealing means comprises an aperture.

Preferably the horizontal portion and/or vertical portion comprises an aperture.

Preferably the or each aperture is a zipped aperture.

Preferably internal padding is insertable into the sealing means via the zipped aperture.

Preferably internal padding is insertable into the horizontal portion and/or vertical portion via the zipped aperture.

Preferably the sealing means comprises an upper portion.

Preferably the sealing means comprises a lower portion.

Preferably the sealing means comprises a horizontal portion.

Preferably the sealing means comprises a vertical portion.

Preferably the sealing means comprises a horizontal portion and a vertical portion.

Preferably the sealing means comprises a corner portion.

Preferably the corner portion connects the horizontal and vertical portions.

Preferably the upper portion, corner portion and/or lower portion is locatable between a door and at least a part of a doorframe, opening or wall, in use.

Optionally the draught excluder is lockable.

Optionally the draught excluder has a locked configuration and an unlocked configuration.

Optionally the draught excluder comprises a locking means.

Optionally the draught excluder comprises a locking means for locking/and or securing the door and the draught excluder.

Preferably the locking means is adapted to lock the door and draught excluder in a door-ajar position.

Preferably the locking means is adapted to hold the sealing means in contact with the wall surrounding the aperture, opening or door frame.

Preferably in the locked configuration, the door is prevented from opening further.

Preferably in the locked configuration, the locking means prevents the door from opening further.

Preferably in the locked configuration, the door is prevented from closing further.

Preferably in the locked configuration, the sealing means prevents the door from closing further.

Preferably the locking means comprises a door chain.

Preferably the door chain is fixedly attached to the draught excluder.

Preferably the door chain passes through the sealing arrangement.

Optionally the draught excluder comprises a structural support means.

Preferably the structural support means is attachable to the edge of a door.

Optionally the draught excluder is an all-in-one dual-purpose item.

Optionally the draught excluder comprises a covering means for the gap.

Preferably the covering means is a movable covering means.

Preferably the covering means is cloth flap.

Preferably the covering means is attached at or towards the bottom of the draught excluder.

Preferably the covering means is attached towards or at the lowermost part, in use, of the sealing means.

Preferably the covering means is for limiting air movement through the gap while still allowing pets to pass through the gap.

Preferably the covering means has a first position in which the gap is substantially covered by the covering means.

Preferably in the first position movement of air through the gap is limited by the covering means.

Preferably the covering means has a second position in which the gap is not covered by the covering means so that a pet is able to pass through the gap.

Optionally the draught excluder comprises a hinged section.

Preferably in use the hinged section is located at or near the bottom of the draught excluder.

Preferably in use the hinged section at least partially covers the gap.

Preferably the vertical portion comprises a hinged section.

Preferably the vertical portion comprises a hinged section proximal to the gap.

Preferably the hinged section is formed by a gap in the internal padding of the vertical portion.

Preferably the hinged section creates a "pendulum" that the pet can push through.

Preferably the hinged section is a continuation of the main draught excluder.

Optionally the hinged section is a separate section attached to the draught excluder.

Optionally the hinged section is attached to the bottom of the draught excluder.

Optionally the hinged section is attached to the bottom of the vertical portion.

Optionally the hinged section is removable.

Preferably the pendulum can be a grooming product for collecting hair from the pet as it moves through.

Preferably flat brushes or disposable grooming strips are attached to the hinged section. Advantageously the pets get groomed as it moves through - the brushes or elcro-like material can then be cleaned periodically.

Optionally the draught excluder comprises a grooming means.

Optionally the draught excluder comprises a grooming means for grooming and/or removing dirt, dust, fur and/or dander from an animal's coat.

Preferably the grooming means is located at the lower edge of the draught excluder, proximal to the gap. Advantageously, animals such as pets are able to pass through the gap while being groomed by the grooming means.

Preferably in use the grooming means is located at or near the bottom of the draught excluder.

Preferably, when passing through the gap, animals such as pets will pass through the grooming means.

Preferably the grooming means is adapted to facilitate grooming and/or removing dirt, dust, fur and/or dander from an animal's coat.

Preferably the grooming means comprises one or more brush portions and/or bristles.

Preferably the grooming means comprises a first grooming element.

Preferably the grooming means comprises a second grooming element.

Preferably the first grooming element comprises a body portion.

Preferably the first grooming element comprises a brush means. Advantageously the brush means acts to groom and/or remove dirt, dust, fur and/or dander from the pet's coat.

Preferably the second grooming element comprises a body portion.

Preferably the second grooming element comprises a brush means. Advantageously the brush means acts to groom and/or remove dirt, dust, fur and/or dander from the pet's coat.

Preferably the or each brush means comprises a plurality of bristles.

Preferably the or each brush means comprises a plurality of bristles for grooming and/or removing dirt, dust, fur and/or dander from an animal's coat.

Preferably the bristles of the or each brush means extend into the gap.

Preferably the bristles of the or each brush means extend into the gap such that when an animal passes through the gap the grooming means may engage with an animal's coat.

Preferably the or each brush means comprises velcro-like material.

Preferably the body portion of the first grooming element is attached to the sealing means.

Preferably the body portion of the first grooming element is attached to the vertical portion of the sealing means.

Preferably the body portion of the first grooming element is attached to the distal end of the vertical portion of the sealing means.

Preferably the body portion of the first grooming element extends at an angle to the vertical portion of the sealing means. Advantageously the angle between the body portion of the first grooming element and the vertical portion of the sealing means ensures that there is a gap between the sealing means and the door frame or wall.

Preferably the body portion of the second grooming element is attached to the door frame or wall.

Preferably the body portion of the second grooming element is adhesively attached to the door frame or wall.

Preferably the body portion of the second grooming element may be attached to the door frame via fixing means such as tacks, nails or screws or magnetic means.

Optionally the body portion of the second grooming element may be attached to the door frame.

Optionally the draught excluder is made from a material such as cloth.

Optionally the draught excluder is made from a solid material such as card, wood or plastic etc.

Optionally a storage space may be created within the draught excluder, for example within the sealing means.

Preferably the draught excluder comprises a sealing agent.

Preferably the sealing agent comprises neoprene strips.

Preferably the sealing agent is used to seal the interface between the draught excluder and the door, wall opening or doorframe.

Optionally a rough material may be used on the draught excluder.

Preferably the rough material accommodates a cat scratching procedure. Advantageously in such embodiments the draught excluder will replace a scratching pole within a e.g. living room.

According to a further aspect of the invention there is provided a system comprising a draught excluder and a door. Advantageously, the draught excluder is dual purpose in that it allows draughts to be prevented while still allowing e.g. pets to pass through the doorway or opening in which the door is mounted.

Ideally the draught excluder is mounted on the door.

Preferably the draught excluder may be directly attached to the door via fixings such as adhesives, tacks, nails or screws, or via magnetic means.

Preferably the door is an internal door.

Preferably the door is a hinged door or a sliding door.

Preferably a plurality of permanent magnets are located on the side of the door.

Optionally the door is an external door.

Preferably the draught excluder is mounted on an upper corner of the door.

Preferably the draught excluder is mounted on an upper and outer corner of the door.

Preferably the draught excluder is mounted on the door via an attachment means.

Preferably the attachment means engages the upper corner of the door.

Preferably the attachment means is attached to the upper corner or edge of the door.

Preferably the sealing means provides a seal between at least a part of the door and the doorframe, wall or opening.

Preferably the sealing means is adapted to maintain a small distance between the door and a wall

Preferably a gap is formed under the draught excluder. Advantageously, pets are able to pass through the doorway or opening via the gap.

Preferably a gap is formed between the door and the door frame or opening, and below the sealing means.

Preferably the gap is formed towards the lower edge of the door.

Preferably the draught excluder is shorter than the door.

Preferably the sealing means is shorter than the door.

Preferably the vertical portion is shorter than the door.

Preferably the system comprises a wall.

Preferably the system comprises a doorway or opening.

Preferably the doorway or opening is located in the wall.

Preferably the system comprises a door frame.

Preferably the door frame surrounds the doorway or opening in the wall.

Preferably the door is mounted to the door frame.

Optionally the door comprises one or more panes of glass or windows.

Optionally the draught excluder is mounted on the wall, doorway, doorframe or other opening. Advantageously, mounting the draught excluder to the door frame or wall as opposed to hanging it on the door allows for tight spaces and unusual door openings to use a draught excluder without impinging on the goods or people moving through. Further advantageously, mounting the draught excluder to the door frame or wall prevents e.g. children knocking the draught excluder off the door accidentally, and/or highly active cats climbing and pulling the draught excluder down.

Preferably the draught excluder may be directly attached to the wall, doorway, doorframe or opening via fixings such as adhesives, tacks, nails or screws, or via magnetic means.

Preferably the door frame comprises a doorstop.

Preferably the draught excluder is mounted on the door via a bracket.

Preferably in use the bracket retains the draught excluder against the doorframe and/or the doorstop of the doorframe.

Preferably in use the bracket retains at least a part of the sealing means against the doorframe and/or the stop of the doorframe.

Preferably in use the bracket retains the horizontal portion of the sealing means against the doorframe and/or the stop of the doorframe.

Preferably in use the bracket catches on part of the door frame and retains the door in a semi-closed position.

Preferably in use an engagement means of the bracket catches on part of the door frame and retains the door in the semi-closed position.

Preferably the sealing means is adapted to prevent draughts from passing through the doorway or opening while holding the door slightly ajar.

Preferably the door is in a semi-closed position. By 'semi-closed position' it is meant a position in which the door is not fully open and not fully closed. Preferably in the semi-closed position the door is ajar and/or is not sufficiently open and/or unobstructed to be used by e.g. a human adult.

Preferably the door is prevented from fully closing by the draught excluder.

Preferably the sealing means is sealably located between the door and an aperture/door frame in which the door is mounted.

Preferably the sealing means prevents air moving through the doorway or opening at the positions where the sealing means is located,

Preferably the path for air to pass through the doorway or opening is partially blocked by the sealing means.

According to a further aspect of the invention there is provided a draught excluder for defining a gap for a pet to pass therethrough.

According to a further aspect of the invention there is provided a draught excluder configured to allow a pet to pass therethrough.

According to a further aspect of the invention there is provided a draught excluder for limiting the movement of air through a doorway, the draught excluder comprising: an attachment means for attaching the draught excluder to a door or door frame; and a sealing means for limiting and/or preventing the flow of air or draughts through the doorway.

According to a further aspect of the invention there is provided a bracket for retaining and/or locating a draught excluder. Advantageously, the bracket can be used to hold the draught excluder at an appropriate position or height on a door.

Preferably the bracket comprises a connection means.

Preferably the connection means is adapted to allow the bracket to be attached to a door.

Preferably the connection means fits over the top of a door.

Optionally the bracket comprises a retainment means

Preferably the retainment means is adapted to engage and retain a draught excluder.

Preferably the retainment means is sized so as to receive at least a part of the draught excluder.

Preferably the retainment means is sized so as to receive the upper horizontal portion of the sealing means.

Preferably at least a part of the sealing means is locatable in the retainment means.

Preferably the horizontal portion of the sealing means is locatable in the retainment means.

Preferably the horizontal portion rests on the bracket and is held at an appropriate position with respect to the top or upper portion of the door.

Preferably the bracket holds the draught excluder at an appropriate height above the floor such that a gap is formed below the draught excluder.

Preferably the bracket comprises an engagement means. Advantageously the engagement means can be specifically designed to catch itself on the doorstop part of the door frame, eliminating the need for velcro or elastic bands to keep the door in place with the draught excluder fitted.

Preferably the engagement means is adapted to engage with at least a part of a door.

Preferably the engagement means is adapted to engage with the doorstop part of a door frame.

Preferably in use the bracket retains and locates a draught excluder in position with respect to a door.

Preferably the bracket is attached to the door by fitting the attachment means of the bracket over the top of the door to rest thereon.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The invention will now be described with reference to the accompanying drawings which show, by way of example only, several embodiments of an apparatus in accordance with the invention.
Figure 1 is a perspective view of a door having a draught excluder according to an aspect of the invention.
Figure 2 is a perspective view of a door having an alternative draught excluder according to an aspect of the invention.
Figure 3 is a perspective view and a detailed view of a door having a further alternative draught excluder according to an aspect of the invention.
Figure 4 is a perspective view of a bracket according to an aspect of the invention.
Figure 5 is a side view of a door, a bracket and a draught excluder according to an aspect of the invention.
Figure 6 shows multiple side views of a door, a door frame, a bracket and a draught excluder according to an aspect of the invention.
Figure 7 shows a perspective view of a door, a door frame and a draught excluder according to an aspect of the invention.
Figure 8 shows a perspective view of a door, a door frame and a draught excluder according to an aspect of the invention.
Figure 9 shows a perspective view of a door, a door frame and a draught excluder according to an aspect of the invention.

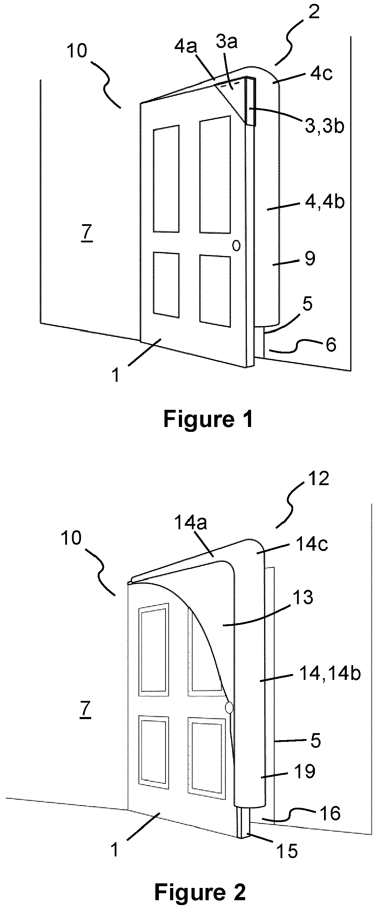

In figure 1 there is shown a door 1 having a draught excluder 2 attached thereto. The draught excluder 2 comprises an attachment bracket 3 and a sealing arrangement 4. When the door 1 is in a semi-closed position in doorway 10, as shown in figure 1, the sealing arrangement 4 is sealably located between the door 1 and the aperture/door frame 5 in which the door 1 is mounted. In use, the sealing arrangement 4 prevents air moving through the doorway 10 (i.e. it prevents/excludes draughts or 'drafts') at the positions where the sealing arrangement 4 is located, the path for air to pass through the doorway 10 being at least partially blocked by the sealing arrangement 4.

The sealing arrangement 4 comprises an upper horizontal portion 4a which is locatable between the door 1 and the part of the wall 7 adjacent to the upper portion of the aperture/door frame 5. The sealing arrangement 4 further comprises a lower vertical portion 4b which is locatable between the door 1 and the part of the wall 7 adjacent to the vertical side of the aperture/door frame 5 (adjacent to the door handle when the door is closed). A corner portion 4c connects the horizontal and vertical portions 4a,4b of the sealing arrangement 4.

The sealing arrangement 4 is a flexible and padded member comprising an outer sheath 9 and internal padding. In preferable embodiments the outer sheath 9 is flexible and comprises cloth or similar material, and the internal padding is foam. The outer sheath 9 may comprise a zipped aperture through which the sealing arrangement 4, particularly the horizontal portion and/or vertical portion, can be filled with internal padding.

As shown in figure 1, the sealing arrangement 4, particularly the vertical portion 4b, is shorter than the door 1 so that the draught excluder 2 ensures that there is a gap 6 towards the lower edge of the door 1. The gap 6 is located between the floor and the bottom of the sealing arrangement 4, and between the door 1 and the aperture/door frame 5/wall 7. The sealing arrangement 4 prevents draughts from passing through the doorway 10 while holding the door 1 slightly ajar. The gap 6 allows pets to pass under the draught excluder 2 and through the doorway 10. The gap may be e.g. 30 cm in height and 20 cm in width, although the gap may be provided with a different height and/or width to suit pets of different sizes. The draught excluder 2 prevents the door 1 from completely closing so that a pet can pass through the doorway at any time it needs to, without a building occupant having to actively open the doorway.

The attachment bracket 3 is locatable over, and attachable to, the outer and upper corner of the door 1. By 'outer and upper corner' it is meant that corner of door 1 which is uppermost in use and furthest from the door frame 5 when the door 1 is in an open or semi-closed position. The attachment bracket 3 comprises two right-angled triangular portions 3a which are connected by two rectangular portions 3b. The upper corner of the door 1 can be received in the attachment bracket 3. In figure 1, the sealing arrangement 4 is attached to a first side of the bracket 3, i.e. to a first triangular portion 3a (not visible in figure 1). Where the draught excluder 2 is to be used with an oppositely-opening door (i.e. a door which opens in the opposite direction) the sealing arrangement 4 can be attached to the opposing side of the bracket 3 (i.e. to the other triangular portion 3a) via fastening means.

In use, the door 1 is opened and the draught excluder 2 is attached to the door by engaging the attachment bracket 3 with the outer and upper corner of the door 1. The door is then pushed towards a semi-closed position until the sealing arrangement 4 makes contact with the wall surrounding the aperture/door frame 5. In this position, at least a part of the sealing arrangement 4 will be located between the door 1 and the wall 7 or door frame 5, preventing the door 1 from closing completely. The sealing arrangement 4 allows a distance to be maintained between the door 1 and the wall or doorframe i.e. the door 1 is held slightly ajar in a semi-closed position by the sealing arrangement 4. The doorway 10 is sealed where the sealing arrangement 4 makes contact with the wall 7 and/or door frame 5. A gap 6 is formed below the sealing arrangement 4 to allow pets to pass through the doorway 10.

Figure 2 discloses a second embodiment of the draught excluder 12 attached to a door 1. The draught excluder 12 is an all-in-one dual-purpose item. The draught excluder 12 comprises an attachment portion 13 and a sealing arrangement 14. The draught excluder 12 is similar to the first embodiment, and can be used in a similar way, with similar numerals (e.g. 4a,14a) denoting similar components. The distinguishing features of the second embodiment are the attachment portion 13, the sealing arrangement 14 and the structural support 15.

The attachment portion 13 comprises half-moon sections 13a locatable on each side of the door 1. The attachment portion 13 again retains the draught excluder 12 on the door 1 by engaging the upper portion of the door 1.

The sealing arrangement 14 is generally similar in form and construction to the sealing arrangement 4 of the first embodiment, having an upper horizontal portion 14a, a vertical portion 14b and a corner portion 14c. However, unlike the sealing arrangement 4, the sealing arrangement 14 is locatable over the edge of the door, rather than being located generally on one side of the door 1, in use. The draught excluder 12 includes a structural support 15 attachable to the edge of the door.

In use, the door 1 is opened and the draught excluder 12 is located over the door 1. The draught excluder 12 is thereby attached to the door 1 via the attachment portion 13 which engages with the upper corner of the door 1. The door 1 is then pushed towards a semi-closed position such that the sealing portion 14 makes contact with the wall surrounding the aperture/door frame 5. In this position, at least a part of the sealing arrangement 14 will be located between the door 1 and the wall 7 or door frame 5, preventing the door 1 from closing completely. A small distance is maintained between the door 1 and the wall 7. A gap 16 is formed under the vertical portion 14b of the sealing arrangement 14 allowing pets to use the doorway 10 and pass through the gap 16.

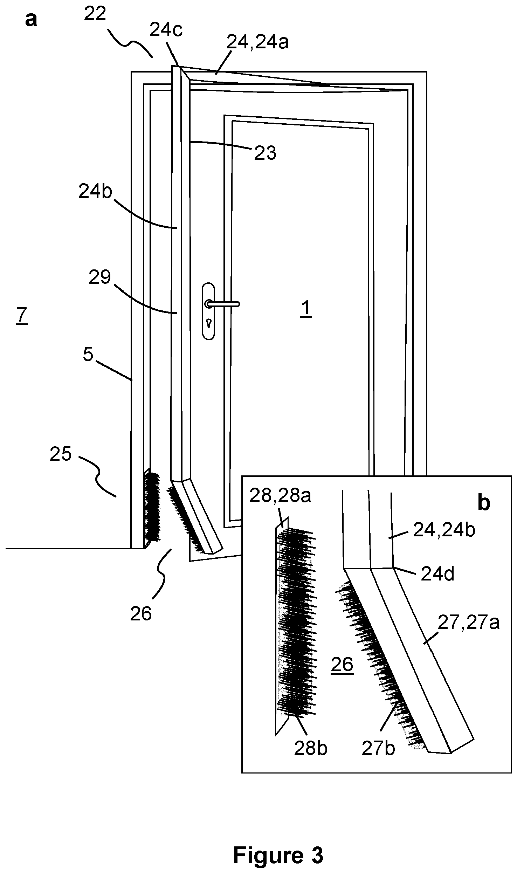

Figure 3 discloses a third embodiment of the draught excluder 22 attached to a door 1. The draught excluder 22 comprises an attachment portion 23 and a sealing arrangement 24. The draught excluder 22 is similar to the first and second embodiments thereof, and can be used in a similar way, with similar numerals (e.g. 4a,14a,24a) denoting similar components. The distinguishing features of the third embodiment are the attachment portion 23, the sealing arrangement 24 and the grooming arrangement 25.

The attachment portion 23 is located on a surface of the draught excluder 22, particularly the attachment portion 23 is the surface of the sealing arrangement 24 which faces the door, in use. In alternative embodiments the draught excluder 22 may be attached to the door via a bracket. The attachment portion 23 retains the draught excluder 22 on the door 1. The draught excluder 22 is held to the door via attachment of the attachment portion 23 to the door 1. In preferred embodiments, the attachment portion 23 is adhesively attached to the door 1. In optional embodiments the attachment portion 23 may be attached to the door 1 via a bracket 30, or via fixing members such as tacks, nails or screws, or via magnetic arrangements attached to both the door and draught excluder 22.

The sealing arrangement 24 is generally similar in form and construction to the sealing arrangement 4 of the first embodiment, having an upper horizontal portion 24a, a vertical portion 24b and a corner portion 24c. The sealing arrangement 24 is a flexible and padded member comprising an outer sheath 29a and internal padding (not shown). The outer sheath 29a is flexible and comprises cloth or similar material, and the internal padding is foam. The sealing arrangement 24 comprises a zip 29b which closes an aperture in the outer sheath 29a. Opening the zip 29b allows internal padding to be inserted and/or removed from the sealing arrangement 24.

Figure 3 (panel a) shows the draught excluder 22 comprising a grooming portion 25. The grooming portion 25 is located at or near the lower edge of the draught excluder 22, proximal to the gap 26. The grooming portion 25 is adapted to facilitate grooming and/or removing dirt, dust, fur and/or dander from an animal's coat.

Figure 3 (panel b) shows in detail the grooming portion 25. The grooming portion 25 comprises a first grooming element 27 and a second grooming element 28. The first grooming element 27 comprises a body portion 27a and a brush portion 27b. The second grooming element 28 comprises a body portion 28a and a brush portion 28b. Each brush portion 27b,28b comprises a plurality of bristles for grooming and/or removing dirt, dust, fur and/or dander from an animal's coat. The bristles of each brush portion 27b,28b extend into the gap 26 such that when an animal passes through the gap 16 the grooming portion may engage with an animal's coat etc. In optional embodiments each brush portion 27b,28b comprises velcro or a velcro-like material.

The body portion 27a of the first grooming element 27 is attached to the sealing arrangement 24. In particular, the body portion 27a is attached to the distal end 24d of the vertical portion 24b of the sealing arrangement 24. The body portion 27a of the first grooming element 27 extends at an angle to the vertical portion 24b. The angle between the body portion 27a of the first grooming element 27 and the vertical portion 24b of the sealing arrangement 24 ensures that there is a gap 26 between the sealing arrangement 24 and the door frame 5 or wall 7, even when the vertical portion 24b is adjacent to and/or abuts the door frame 5 or wall 7. In optional embodiments the body portion 27a may be attached to the sealing arrangement 24 via a hinge.

The body portion 28a of the second grooming element 28 is attached to the door frame 5 or wall 7. In preferred embodiments, the body portion 28a of the second grooming element 28 is adhesively attached to the door frame 5. In optional embodiments the body portion 28a of the second grooming element 28 may be attached to the door frame 5 via fixing members such as tacks, nails or screws or magnetic arrangements, and may be attached to the wall 7 rather than the door frame 5.

In use, the door 1 is opened and the draught excluder 22 is attached to the door 1/door frame 5. The door 1 is then pushed towards a semi-closed position such that the sealing portion 24 makes contact with the wall surrounding the aperture and/or the door frame 5. A small distance is maintained between the door 1 and the wall and a gap 26 is formed under the vertical portion 24b of the sealing arrangement 24, allowing pets to use the doorway 10. Pets are able to pass through the gap 26. When doing so, the pets will pass through the grooming portion 25. Each brush portion 27b,28b acts to groom and/or remove dirt, dust, fur and/or dander from the pet's coat.

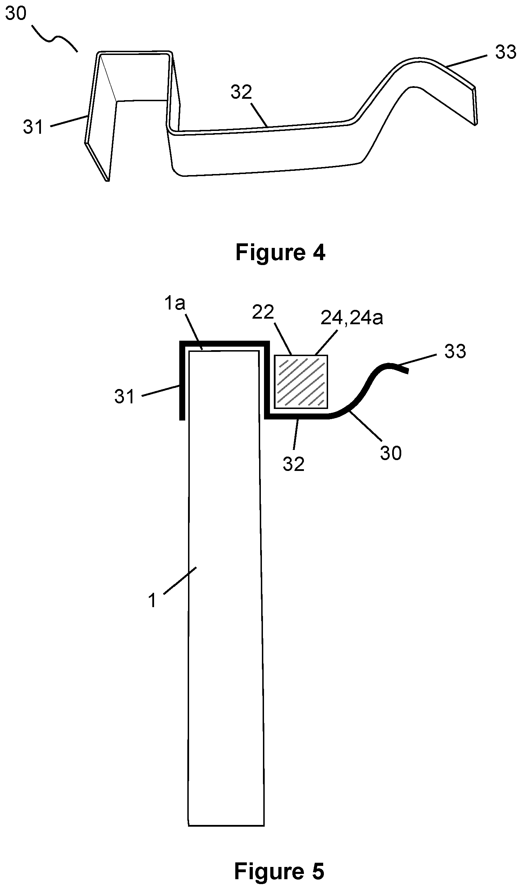

Figure 4 discloses a bracket 30 according to an aspect of the invention. The bracket 30 is adapted for attaching a draught excluder to a door 1. The bracket 30 is specifically designed to catch itself on the doorstop part of the door frame thus eliminating the need for velcro or elastic bands to keep the door in place with a draught excluder fitted.

The bracket 30 comprises a connection portion 31, a retainment portion 32 and an engagement portion 33. The connection portion 31 is adapted to allow the bracket to be connected to a door 1. In particular, the connection portion 31 has a plurality of right-angled corners and fits over the upper edge 1a of a door, as shown in figure 5. The retainment portion 32 is adapted to engage and retain a draught excluder. In particular, the retainment portion 32 is generally straight, and is sized so as to receive part of the draught excluder, e.g. the upper horizontal portion 24a of the sealing arrangement 24. The engagement portion 33 is adapted to engage with the doorstop part 5a of a door frame 5. The engagement portion 33 is generally curved.

In use, the bracket 30 retains and locates a draught excluder, for example draught excluder 22, in position with respect to a door 1. The bracket 30 is attached to the door 1 by fitting the connection portion 31 of the bracket 30 over the top of the door 1 to rest thereon. Preferably one or two brackets 30 are fitted over the door 1 in this way. The horizontal portion 24a of the sealing arrangement 24 is placed in the retainment portion 32 of the or each bracket 30. The horizontal portion 24a rests on the bracket and is held at an appropriate position with respect to the top of the door 1. The bracket 30 holds the draught excluder 22 at an appropriate height above the floor such that a gap 26 is formed below the draught excluder 22.

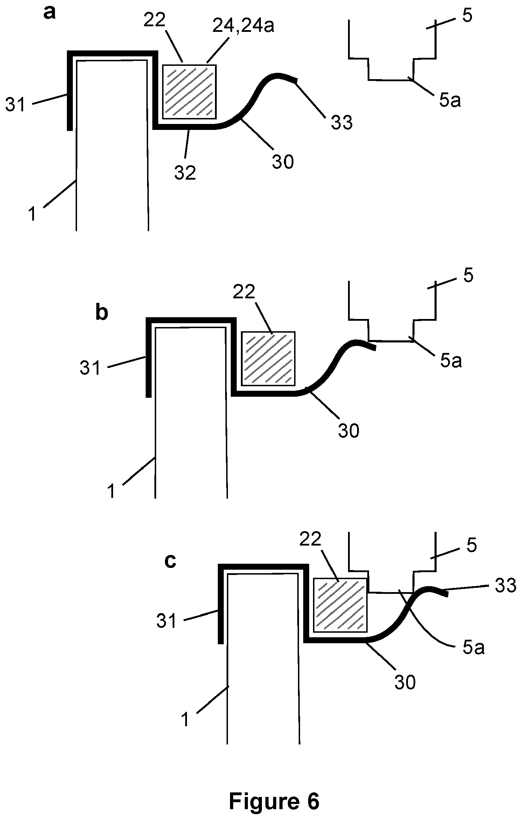

Figure 6 shows side views of a door having a bracket 30 and a draught excluder 22 attached thereto, and a door frame 5. Panel a shows these components in an open configuration in which the door 1 is at least partially open and the bracket 30 is separated from the door frame 5. When the door 1 moves towards the semi-closed position the engagement portion 33 moves towards the door frame 5. The door frame 5 comprises a doorstop 5a. As the door 1 closes the bracket 30 reaches a position where the engagement portion 33 engages the doorstop 5a (panel b). As the door 1 closes further the engagement portion 33 flexes and moves past the doorstop 5a. In the semi-closed position shown in panel c the engagement portion 33 rests against the inside of the doorstop 5a, and the sealing arrangement 24 rests against the opposite side of the doorstop 5a. In the position shown in panel c the bracket 30 retains the draught excluder 22, particularly the horizontal portion 24a of the sealing arrangement 24 against the stop 5a of the doorframe 5. The bracket 30, particularly the engagement portion 33, catches on part of the door frame 5 and retains the door 1 in the semi-closed position.

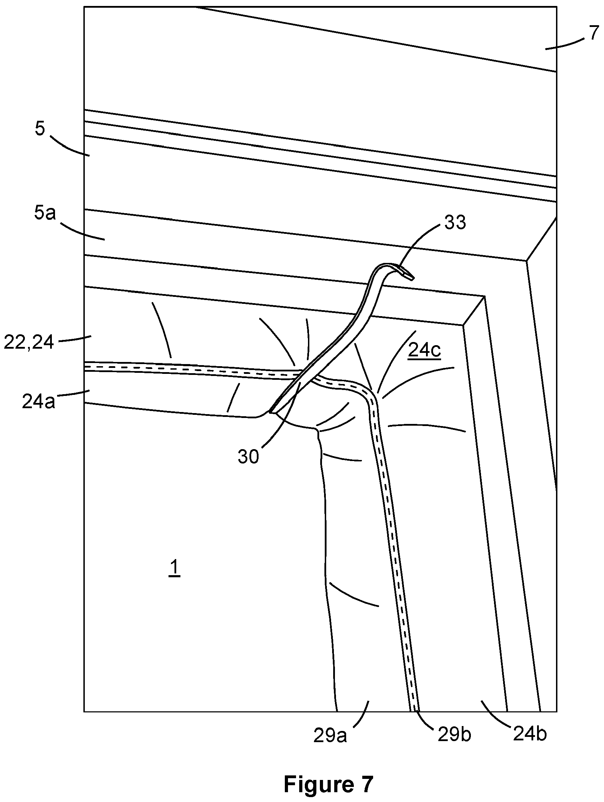

Figure 7 shows the draught excluder 22 mounted on a door 1 via a bracket 30. The sealing arrangement 24 is located between the door 1 and the door frame 5, preventing the door 1 from closing completely. The sealing arrangement 24 allows a distance to be maintained between the door 1 and the door frame 5 i.e. the door 1 is held slightly ajar in a semi-closed position by the sealing arrangement 24. The engagement portion 33 of the bracket 30 catches on part of the door frame 5 and keeps the door 1 in the semi-closed position (i.e. the bracket 30 is adapted to provide at least some resistance to the opening of the door).

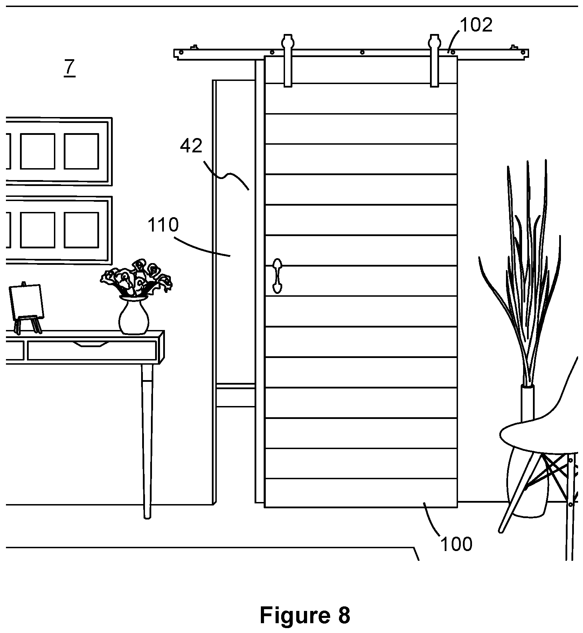

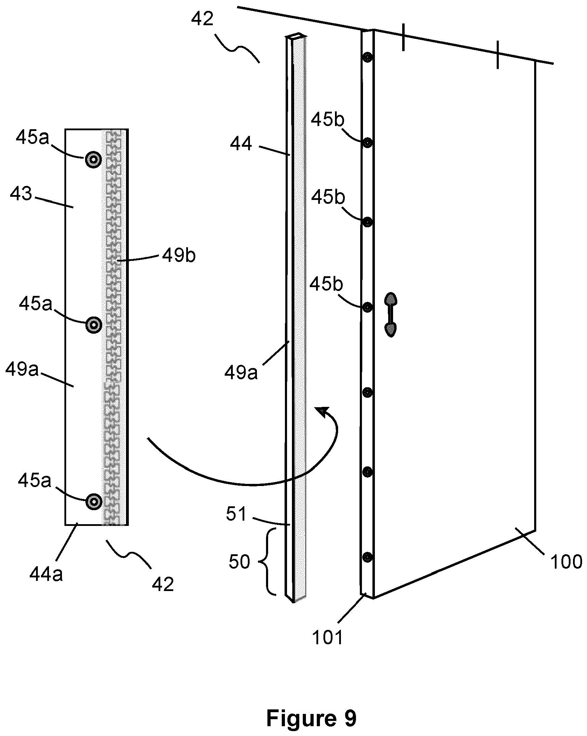

Figures 8 and 9 disclose a fourth embodiment of the draught excluder 42 attached to a door 100. The door 100 is a sliding door mounted on a rail 102. The draught excluder 42 comprises an attachment portion 43 and a sealing arrangement 44. The draught excluder 42 is similar to the first embodiment, and can be used in a similar way, with similar numerals (e.g. 4,44) denoting similar components. The distinguishing features of the fourth embodiment are the attachment portion 43, the sealing arrangement 44 and the hinged portion 50.

The attachment portion 43 is a magnetic attachment portion 43. The attachment portion 43 comprises a plurality of permanent magnets 45a. The attachment portion 43 is located on a surface 44a of the sealing arrangement 44. A plurality of permanent magnets 45b are also located on the side 101 of the door 100. The spacing between the magnets 45b on the side 101 of the door 100 matches the spacing between the magnets 45a of the attachment portion 43. The draught excluder 42 can be releasably attached to the door 100 by bringing the magnets 45a on the attachment portion 43 into close proximity with the magnets 45b on the door 100 such that the magnets 45a,45b attract. As will be appreciated, the exposed polarity of the magnets 45b on the side 101 of the door 100 is opposite to the exposed polarity of the magnets 45a of the attachment portion 43. In use, the attachment portion 43 retains the draught excluder 12 on the door 1 by engaging the magnets 45b on the side 101 of the door 100.

The sealing arrangement 44 is locatable over the edge of the door 1, in use. The sealing arrangement comprises a vertical portion only, but may include a horizontal portion also. The sealing arrangement 44 is a flexible and padded member comprising an outer sheath 49a and internal padding (not shown). The outer sheath 49a is flexible and comprises cloth or similar material, and the internal padding is foam. The sealing arrangement 44 comprises a zip 49b which closes an aperture in the outer sheath 49a. Opening the zip 49b allows internal padding to be inserted and/or removed from the sealing arrangement 44.

A hinged section 50 is located at or near the bottom of the draught excluder 42, particularly at the bottom of the vertical portion of the sealing arrangement 44. The hinged section 50 is formed by a gap 51 in the internal padding of the sealing arrangement 44. The hinged section 50 creates a "pendulum" that a pet, such as a cat, can push through to be able to use the doorway while the draft excluder 44 is being used.

In use, the draught excluder 42 is mounted on the side of the door 100. The draught excluder 42 is attached to the door 100 via the attachment portion 43 which engages with the magnets 45b on the side 101 of the door 100. The door 100 is then pushed towards a semi-closed position such that the sealing portion 44 makes contact with the wall surrounding the aperture/door frame 5. In optional embodiments a gap may be formed under the sealing arrangement 44 allowing pets to use the doorway 110 and pass through the gap.

The present invention is particularly useful for external doors. Many people in rented accommodation are not allowed to make changes to external doors, such as by installing cat flaps for their pets. The present draught excluder 2,12,22,42 provides a solution for pets to come and go during the day in those houses that don't have a traditional cat flap in an external door. When used with an external door, the sealing arrangement 4,14,24,42 can comprise a waterproof outer sheath.

In optional embodiments the draught excluder 2,12,22,42 can also include a locking arrangement for locking/and or securing the door 1 while the draught excluder 2,12,22,42 is being used. For example, the locking arrangement may lock the door 1 and draught excluder 2,12,22,42 in the door-ajar position where the sealing arrangement 4,14,24 makes contact with the wall surrounding the aperture/door frame 5. When locked, the locking arrangement then prevents the door 1 from opening further, and the draught excluder 2,12,22,42 prevents the door 1 from closing further. The locking arrangement may include an extended door chain which is fixedly attached to the draught excluder 2,12,22,42 and which passes through the sealing arrangement 4,14,24.

As will be understood by the skilled person, the example embodiments presented above can be modified in a number of ways without departing from the scope of the invention. For example, the draught excluder may be used with any suitable door-like element which is used to close an aperture or opening in a wall, and the sealing arrangement may use any suitable materials, such as waterproof materials. The door may comprise one or more panes of glass or windows. The draught excluder 2,12,22,42 may be made from a solid material such as card, wood or plastic etc. In optional embodiments a storage space may be created within the draught excluder. A sealing agent such as Neoprene strips - as in car doors - may be used to seal the interface between the draught excluder 2,12,22,42 and the door, wall or door frame. A rough material may be used on the draught excluder 2,12,22,42 to accommodate a cat scratching procedure. In such embodiments the draught excluder 2,12,22,42 will replace a scratching pole within a e.g. living room.

In optional embodiments the draught excluder 2,12,22,42 may comprise a covering for the gap 6,16,26, such as a movable cover member in the form of a small cloth flap attached towards the bottom of the draught excluder 2,12,22,42, particularly towards or at the lowermost part, in use, of the sealing arrangement 4,14,24,44. Such a covering can be used to limit air movement through the gap 6,16,26 while still allowing pets to pass through the gap 6,16,26. The covering has a first position in which the gap 6 is substantially covered by the covering, and a second position in which the gap 6,16,26 is not covered by the covering and a pet is able to pass through the gap 6,16,26. In the first position movement of air through the gap is limited by the covering.

In optional embodiments the draught excluder 2,12,22,42 may comprise a hinged section. In use the hinged section is located near the bottom of the draught excluder 2,12,22,42, particularly at the bottom of the vertical portion of the sealing arrangement 4,14,24,44. The draught excluder 2,12,22,42 may go all the way to the floor with a hinged section near the bottom. The hinged section can be formed by a gap in the internal padding of the vertical portion. The hinged section creates a "pendulum" that a pet can push through. The hinged section may be a continuation of the main draught excluder, or may be a separate section attached to the draught excluder. The hinged section may be attached at or near to the bottom of the draught excluder, e.g. to the bottom of the vertical portion, and may be removable. The hinged section can be a grooming product for collecting hair from the pet as it moves through. Flat brushes or disposable grooming strips are attached to the hinged section. Advantageously the pets get groomed as it moves through - the brushes or velcro-like material can then be cleaned periodically.

In further optional embodiments the draught excluder 2,12,22,42 is mounted on the door frame 5 or wall 7, rather than the door 1. For example, the third embodiment of the draught excluder 22 may be directly attached to the door frame 5 via one or more brackets, via fixings such as adhesives, tacks, nails or screws, or via magnetic arrangements. The fourth embodiment of the draught excluder 42 may be directly attached to the door frame 5 via magnets mounted on the door frame or wall. Mounting the draught excluder 2,12,22,42 to the door frame 5 or wall 7 as opposed to hanging it on the door 1 allows for tight spaces and unusual door openings to use a draught excluder 2,12,22,42 without impinging on the goods or people moving through. Furthermore, mounting the draught excluder 2,12,22,42 to the door frame 5 or wall 7 prevents e.g. children knocking the draught excluder 2,12,22,42 off the door accidentally, and/or highly active cats climbing and pulling the draught excluder 2,12,22,42 down.

In the preceding discussion of the invention, unless stated to the contrary, the disclosure of alternative values for the upper or lower limit of the permitted range of a parameter, coupled with an indication that one of the values is more highly preferred than the other, is to be construed as an implied statement that each intermediate value of the parameter, lying between the more preferred and the less preferred of the alternatives, is itself preferred to the less preferred value and also to each value lying between the less preferred value and the intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

## Claims

1. A draught excluder for limiting the movement of air through a doorway or opening, the draught excluder comprising: an attachment means for attaching the draught excluder to a door, doorframe or opening; and a sealing means for limiting and/or preventing the flow of air or draughts through the doorway or opening, wherein at least a part of the sealing means is locatable between a door and a wall, doorframe or opening.

2. A draught excluder according to claim 1 wherein the sealing means comprises a horizontal portion and a vertical portion.

3. A draught excluder according to claim 1 or claim 2 wherein the attachment means is adapted to retain at least a part of the sealing means at or near the upper edge of a door, doorframe or opening.

4. A draught excluder according to any preceding claim wherein the attachment means is configured to receive the upper edge or upper corner of a door.

5. A draught excluder according to any preceding claim wherein the attachment means is a bracket.

6. A draught excluder according to any preceding claim wherein the sealing means comprises an outer sheath and internal padding.

7. A draught excluder according to any preceding claim wherein the draught excluder comprises a grooming means for grooming and/or removing dirt, dust, fur and/or dander from an animal's coat.

8. A draught excluder according to claim 7, wherein the grooming means comprises one or more brush portions and/or bristles.

9. A draught excluder according to claim 7 or claim 8 wherein in use the grooming means is located at or near the bottom of the draught excluder.

10. A draught excluder according to any preceding claim, wherein the draught excluder comprises a hinged section.

11. A draught excluder according to claim 10 wherein in use the hinged section is located at or near the bottom of the draught excluder.

12. A system comprising a draught excluder according to any preceding claim and a door, wherein the draught excluder is attached to the door via the attachment means.

13. A system according to claim 12, wherein the attachment means is attached to the upper corner or edge of the door.

14. A system according to claim 13, wherein the sealing means provides a seal between at least a part of the door and the doorframe, wall or opening.

15. A system according to claim 14, wherein a gap is formed between the door and the door frame or opening, preferably at or below the position of the sealing means.
